# NEUE EUROPÄISCHE PATENTSCHRIFT

(11) **EP 0 429 920 B2**
(45) Veröffentlichungstag und Bekanntmachung des Hinweises auf die Entscheidung über den Einspruch: **21.08.1996**
(45) Hinweis auf die Patenterteilung: 02.02.1994
(21) Anmeldenummer: 90121474.2
(22) Anmeldetag: 09.11.1990
(51) Int. Cl.: C01G 23/053

(54) **Verfahren zur Herstellung von TiO2-Pigmenten**
Process for the preparation of TiO2 pigments
Procédé de préparation de pigments de TiO2

(30) Priorität: 22.11.1989 DE 3938693
(43) Veröffentlichungstag der Anmeldung: 05.06.1991
(73) Patentinhaber: BAYER AG, 51368 Leverkusen (DE)
(72) Erfinder: Wiederhöft, Gerhard, W-4150 Krefeld-Traar (DE); Lailach, Günter, Dr., W-4150 Krefeld (DE)

(56) Entgegenhaltungen:
- DE-A- 2 423 983
- DE-B- 1 110 791
- DE-B- 1 211 348
- US-A- 2 488 755
- US-A- 2 494 492
- US-A- 3 862 297
- US-A- 4 073 877
- Jelsk Barksdale "Titanium", 2nd Edition, The Ronald Press Company, 1966, S. 313, 334-345

## Beschreibung

Die Erfindung betrifft ein Verfahren zur Herstellung von TiO₂-Pigmenten durch Aufschluß von titanhaltigen Rohstoffen mit Schwefelsäure, Hydrolyse des dabei erzeugten Titanylsulfats, Abtrennen der Dünnsäure vom Hydrolysat, Bleiche des Hydrolysats und Kalzinieren des mit Rutilisierungskeimen und Einstellchemikalien versetzten Hydrolysats zu TiO₂-Pigmenten sowie die Rückgewinnung von Schwefelsäure aus der Dünnsäure.

Es ist bekannt, Keime, die sowohl die Hydrolyse als auch die Rutilbildung während der Kalzinierung zu TiO₂-Pigmenten beschleunigen, dadurch herzustellen, daß man gewaschenes Hydrolysat aus dem Titandioxidherstellungsprozeß in Titanat überführt und dieses mit einbasischen Säuren, vorwiegend HCl, zersetzt. Die so hergestellten Keimsuspensionen werden bei der Titanylsulfathydrolyse zugesetzt (DE-A 1 110 791, US-A 2 479 637, US-A 2 507 729).

Außerdem ist bekannt, spezielle Rutilisierungskeime aus gewaschenem Hydrolysat durch Überführen desselben in Titanat und dessen Zersetzung mit HCl herzustellen, und die chloridhaltige Suspension mit dem verbliebenen Hydrolysat zu einem beliebigen Zeitpunkt vor dessen letzter Wäsche vor der Kalzinierung zu mischen (US-A 2 488 755, US-A 2 494 492). Bei den letztgenannten Verfahren kann die Rutilkeimzugabe alternativ auch direkt vor der Kalzinierung erfolgen, wenn die Keimsuspensionen vorher chloridfrei gewaschen worden ist. Wegen der extremen Feinteiligkeit der Rutilisierungskeime ist dieses letztere Verfahren technisch äußerst aufwendig und nicht üblich.

In der DE-PS 1 211 348 wird ein Teil der rutilbildenden TiO₂-Keime zur Titansulfatlösung zugesetzt und ein weiterer Teil einer Keimsuspension zum ausgefällten, vorher gewaschenen Titandioxidhydrat-Gel hinzugegeben. So wird ein Zusammenbacken der Teilchen während der Kalzination vermieden und gleichzeitig ein Produkt mit guten Pigmenteigenschaften erhalten.

Üblicherweise werden außerdem die beim Titandioxidherstellungsprozeß anfallende Dünnsäure und die weiteren verdünnten und verunreinigten Schwefelsäurefraktionen im Verbund mit der TiO₂-Produktion aus ökologischen Erfordernissen der Schwefelsäureaufarbeitung zwecks Rückgewinnung der Schwefelsäure zugeführt. Beim Eindampfprozeß dieser verunreinigten Schwefelsäuren traten jedoch immer wieder Korrosionsprobleme in der Aufarbeitungsanlage auf.

Aufgabe war es daher, ein Verfahren zur Verfügung zu stellen, wodurch die Korrosionsprobleme in der Schwefelsäureaufarbeitung nicht mehr auftreten, ohne daß dadurch der TiO₂-Prozeß und die Qualität der TiO₂-Pigmente negativ beeinflußt werden.

Überraschenderweise konnte diese Aufgabe durch das erfindungsgemäße Verfahren gelöst werden.

Gegenstand der Erfindung ist ein Verfahren zur Herstellung von TiO₂-Pigmenten durch Aufschluß von titanhaltigen Rohstoffen mit Schwefelsäure, Hydrolyse des dabei erzeugten Titanylsulfats, Abtrennen der Dünnsäure vom Hydrolysat, Bleiche des Hydrolysates und Kalzinieren des mit Rutilisierungskeimen und Einstellchemikalien versetzten Hydrolysats zu TiO₂-Pigmenten sowie Rückgewinnung von Schwefelsäure aus der Dünnsäure, wobei die Rutilisierungskeime aus 1 bis 10 Gew.-% des gebleichten und anschließend gewaschenen Hydrolysates hergestellt und ohne vorherige Waschung zu dem Rest des gebleichten und gewaschenen Hydrolysats direkt vor der Kalzinierung zugegeben werden.

Der Teilstrom des gebleichten und anschließend gewaschenen Hydrolysates, aus dem die Rutilisierungskeime hergestellt werden, macht bevorzugt 2 bis 6 Gew.-% des gesamten Hydrolysates aus.

Es wurde überraschenderweise dabei gefunden, das die Qualität der nach dem erfindungsgemäßen Verfahren (Herstellung der Rutilisierungskeime aus Hydrolysat, das vorher gebleicht und gewaschen wurde und Zugabe der Keimsuspension direkt vor der Kalzinierung) erzeugten TiO₂-Pigmente gegenüber dem Stand der Technik deutlich verbessert war. Dieser Befund ist umso überraschender, als sowohl nach dem Stand der Technik wie auch nach dem erfindungsgemäßen Verfahren die Gesamtmenge des zur Kalzinierung gelangenden Materials jeweils nur einmal gebleicht wird, Nach dem Stand der Technik erfolgt außerdem die Bleiche eines Teils des Hydrolysates nach der Umwandlung in Rutilisierungskeime, wodurch auch Verunreinigungen abgetrennt werden, die gegebenenfalls bei der Keimherstellung in die Keimsuspension gelangen. Bei der erfindungsgemäßen Zugabe der Rutilisierungskeime nach der Wäsche des gebleichten Hydrolysates gelangen eventuelle Verunreinigungen aus der Rutilkeimherstellung mit in den Kalzinierofen, so daß eigentlich eine Qualitätsminderung der Pigmente zu erwarten war, anstelle einer Qualitätsverbesserung.

Eine besondere Ausführungsform des erfindungsgemäßen Verfahrens besteht darin, daß die bei der TiO₂-Produktion anfallende Dünnsäure, die zur Rückgewinnung der Schwefelsäure eingedampft wird, weniger als 2 g Cl⁻/kg H₂SO₄, bevorzugt weniger als 1 g Cl⁻/kg H₂SO₄ enthält.

Neben der Qualität der TiO₂-Pigmente wird also auch die Qualität der bei der TiO₂-Produktion anfallenden Dünnsäure verbessert, wodurch das Problem der Korrosion infolge zu hohen Chloridgehaltes in der Dünnsäure in der Aufarbeitungsanlage verringert oder sogar vermieden wird.

Eine Verbesserung der Pigmentqualität gegenüber dem Stand der Technik tritt auch auf, wenn die erfindungsgemäß hergestellten Rutilisierungskeime vor der Bleiche zugefügt werden. Bei dieser Verfahrensweise gelangen jedoch Chloridionen (aus dem Keimbildungsprozeß) in die Schwefelsäure, die bei der reduzierenden Behandlung des Hydrolysates während der Bleiche eingesetztwurde. Wird diese Schwefelsäure dann gemeinsam mit der Dünnsäure oder auch separat eingedampft, so resultieren bei dieser Aufarbeitung die oben erwähnten Korrosionsprobleme aufgrund des hohen Chloridionengehaltes. Diese Verfahrensvariante ist also nur sinnvoll, wenn dieser Teil der Schwefelsäure mit dem hohen Chloridionengehalt nicht aufgearbeitet wird oder die Chloridionen zum größten Teil entfernt werden.

Die Vorteile des erfindungsgemäßen Verfahrens sollen anhand von Beispielen verdeutlicht werden.

### Beispiel 1 (Vergleichsbeispiel)

Durch Hydrolyse von Titanylsulfat gefälltes Titanoxidhydrat (hierin Hydrolysat genannt) wurde durch Filtration von der Dünnsäure getrennt und gewaschen (= Filtration I). Anschließend wurde das Hydrolysat angemaischt und in verdünnter Schwefelsäure durch Zugabe von Al-Pulver gebleicht. Nach der Bleiche wurde erneut filtriert und gewaschen (= Filtration II). Das Filtrat aus Filtration II, verdünnte Schwefelsäure, wurde als Waschflussigkeit in Filtration I verwendet.

Nach Filtration I wurde ein Teil des Hydrolysats entnommen und durch Umsetzung mit Alkali und durch anschließende Zersetzung des dabei gebildeten Titanats mittels Salzsäure in Rutilisierungskeime überführt.

Pro t TiO₂ wurden bei der Anmaischung des Hydrolysats nach der Filtration I 300 l Rutilisierungskeimsuspension zugegeben, die 12,5 kg Cl⁻-Ionen enthielten. Die Rutilisierungskeime wurden mit dem Hydrolysat gebleicht, filtriert und gewaschen. Nach der Filtration II wurde das keimhaltige Hydrolysat mit Einstellchemikalien versetzt und kalziniert. Nach der Mahlung, Nachbehandlung und Mikronisierung des erhaltenen Produktes hatte das Rutilpigment folgende Qualität (Purton gemessen nach DIN 55 983 und relatives Streuvermögen gemessen nach DIN-ISO 787, Teil 24):

| | |
|---|---|
| Helligkeit im Purton | L* = 93,4 |
| Farbton im Purton | S = 2,5 |
| Relatives Streuvermögen | P = 112 |
| Farbstich in Graupaste | 7,4 |

Die in der Filtration I abgetrennte Dünnsäure enthielt 25,2 Gew.% H₂SO₄ und 1880 ppm Cl⁻, entsprechend 7,46 g Cl⁻/kg H₂SO₄.

### Beispiel 2

Hydrolyse und Filtration I erfolgten wie im Beispiel 1. Für die Herstellung der Rutilisierungskeime wurde aber gebleichtes Hydrolysat nach der Filtration II entnommen und wie in Beispiel 1 zu Rutilisierungskeimen umgesetzt. Die Cl⁻-haltige Rutilisierungskeimsuspension wurde (im gleichen Mengenverhältnis wie in Beispiel 1) nach der Filtration II zusammen mit den Einstellchemikalien zugegeben. Kalzinierung und Nachbehandlung erfolgten unterden gleichen Bedingungen wie in Beispiel 1. Das so hergestellte Rutilpigment hatte eine deutlich bessere Qualität als das entsprechend dem Stand der Technik hergestellte Pigment aus Beispiel 1:

| | |
|---|---|
| Helligkeit im Purton | L* = 94,1 |
| Farbton im Purton | S = 2,2 |
| Relatives Streuvermögen | P = 112 |
| Farbstich in Graupaste | 7,5 |

Die in der Filtration I abgetrennte Dünnsäure enthielt 25,1 Gew.% H₂SO₄ und 145 ppm Cl⁻, entsprechend 0,58 g Cl⁻/kg H₂SO₄.

## Patentansprüche

1. Verfahren zur Herstellung von TiO₂-Pigmenten durch Aufschluß von titanhaltigen Rohstoffen mit Schwefelsäure, Hydrolyse des dabei erzeugten Titanylsulfats, Abtrennen der Dünnsäure vom Hydrolysat, Bleiche des Hydrolysats und Kalzinieren des mit Rutilisierungskeimen und Einstellchemikalien versetzten Hydrolysats zu TiO₂-Pigmenten sowie Rückgewinnung von Schwefelsäure aus der Dünnsäure, dadurch gekennzeichnet, daß die Rutilisierungskeime aus 1 bis 10 Gew.-% des gebleichten und anschließend gewaschenen Hydrolysats hergestellt und ohne vorherige Waschung zu dem Rest des gebleichten und gewaschenen Hydrolysats direkt vor dem Kalzinieren zugegeben werden.

2. Verfahren nach Anspruch 1, dadurch gekennzeichnet, das die Rutilisierungskeime aus 2 bis 6 Gew.-% des gebleichten und anschließend gewaschenen Hydrolysates hergestellt werden.

3. Verfahren nach Anspruch 1, dadurch gekennzeichnet, das die bei der TiO₂-Produktion anfallende Dünnsäure, die zur Rückgewinnung der Schwefelsäure aufgearbeitet wird, weniger als 2 g Cl⁻/kg H₂SO₄, vorzugsweise weniger als 1 g Cl⁻/kg H₂SO₄, enthält.

## Claims

1. A process for the production of TiO₂ pigments by digesting titanium-containing raw materials with sulphuric acid, hydrolysing the titanyl sulphate produced thereby, separating the dilute acid from the hydrolysate, bleaching the hydrolysate, and calcining the hydrolysate to form TiO₂ pigments after the addition of rutilising nuclei and standardising chemicals, as well as recovery of sulphuric acid from the dilute acid, characterised in that the rutilising nuclei are produced from 1 to 10 wt.% of the bleached and subsequently washed hydrolysate and are added, without prior washing, to the remainder of the bleached and washed hydrolysate before calcination.

2. The process according to claim 1, characterised in that the rutilising nuclei are produced from 2 to 6 wt.% of the bleached and subsequently washed hydrolysate.

3. The process according to claim 1, characterised in that the dilute acid obtained during the production of TiO₂ and which is worked up to recover the sulphuric acid contains less than 2 g Cl⁻/kg H₂SO₄, preferably less than 1 g Cl⁻/kg H₂SO₄.

## Revendications

1. Procédé de production de pigments de TiO₂ par attaque sulfurique de matières premières contenant du titane, hydrolyse du sulfate de titanyle ainsi produit, séparation de l'acide dilué de l'hydrolysat, blanchiment de l'hydrolysat et calcination de l'hydrolysat additionné de germes de formation de rutile et de substances chimiques ajustant la composition pour former des pigments de TiO₂, ainsi que récupération de l'acide sulfurique de l'acide dilué, caractérisé en ce que les germes de formation de rutile sont produits à partir de 1 à 10 % en poids de l'hydrolysat blanchi puis lavé et sont ajoutés sans lavage préalable au reste de l'hydrolysat blanchi et lavé juste avant la calcination.

2. Procédé suivant la revendication 1, caractérisé en ce que les germes de formation de rutile sont produits à partir de 2 à 6 % en poids de l'hydrolysat blanchi puis lavé.

3. Procédé suivant la revendication 1, caractérisé en ce que l'acide obtenu dans la production de TiO₂, qui est traité en vue de récupérer l'acide sulfurique, contient moins de 2 g de Cl⁻/kg de H₂SO₄, de préférence moins de 1 g de Cl⁻/kg de H₂SO₄.
